# DEMANDE DE BREVET EUROPEEN

(11) **EP 1 759 904 A1**
(43) Date de publication de la demande: **07.03.2007**
(21) Numéro de dépôt: 06350009.4
(22) Date de dépôt: 29.08.2006
(51) Int. Cl.: B60J 7/16

(54) **Véhicule transformable en trois types**

(30) Priorité: 06.09.2005 FR 0509076
(71) Demandeur: Heuliez, 79140 Cerizay (FR)
(72) Inventeur: Quéveau, Paul, 79140 Montravers (FR); Leclerre, Frédéric, 91300 Massy (FR)
(74) Mandataire: Tournel, Jean Louis

(57) **Abrégé**

L'invention a pour objet un véhicule convertible comprenant un panneau mobile (1) relié au moins indirectement au châssis du véhicule par des moyens (2) articulés caractérisé en ce que le panneau mobile est déplaçable entre trois positions pour obtenir une configuration tricorps ou «pick-up» ou bicorps.

## Description

L'invention se rapporte à un véhicule automobile convertible entre les configurations tricorps, «pick-up» et bicorps.

De nos jours, on connaît trois types de véhicules qui sont les tricorps, les «pick-up» et les bicorps.

Le véhicule bicorps se distingue du véhicule tricorps par la position du couvercle de coffre et par la présence d'une lunette arrière située entre le toit et le couvercle du coffre dans le cas du véhicule tricorps.

Le «pick-up» est reconnaissable au fait que le coffre arrière est dépourvu de couvercle. On connaît un véhicule transformable DE 196 16 118 qui consiste à prévoir sur un véhicule quatre roues motrices le retrait de toits. Ces toits sont démontés et peuvent être rangés l'un sous le capot moteur et l'autre au niveau de la portière dans des logements prévus.

Ces toits sont déverrouillés et l'utilisateur du véhicule peut manuellement les transporter soit dans son garage soit dans les logements prévus à cet effet.

L'invention se propose de réaliser une transformation sans détacher les éléments mobiles.

A cet effet, l'invention a pour objet un véhicule convertible comprenant un panneau mobile relié au moins indirectement au châssis du véhicule par des moyens articulés caractérisé en ce que le panneau mobile est déplaçable entre trois positions pour obtenir une configuration tricorps ou «pick-up» ou bicorps.

L'invention sera bien comprise à l'aide de la description ci-après faite à titre d'exemple non limitatif en regard du dessin qui représente :
FIG 1 : Transformation d'un véhicule tricorps en véhicule type «pick-up»
FIG 2 : Transformation d'un véhicule tricorps en véhicule type «pick-up» vue sous un autre angle.
FIG 3 :Transformation d'un véhicule «pick-up» en véhicule bicorps.
FIG 4 : Transformation d'un véhicule «pick-up» en véhicule bicorps vue sous un autre angle.
FIG 5 : Vue de dessus du véhicule en tricorps, «pick-up» et bicorps.

En se reportant au dessin, on voit un véhicule convertible comprenant un panneau mobile 1 relié au moins indirectement au châssis du véhicule par des moyens 2 articulés.

Des bras 2 relient donc le panneau mobile au véhicule.

Le panneau mobile n'est pas séparable du véhicule sauf à démonter les liaisons.

Selon l'invention, le panneau mobile est déplaçable entre trois positions pour obtenir une configuration tricorps ou «pick-up» ou bicorps.

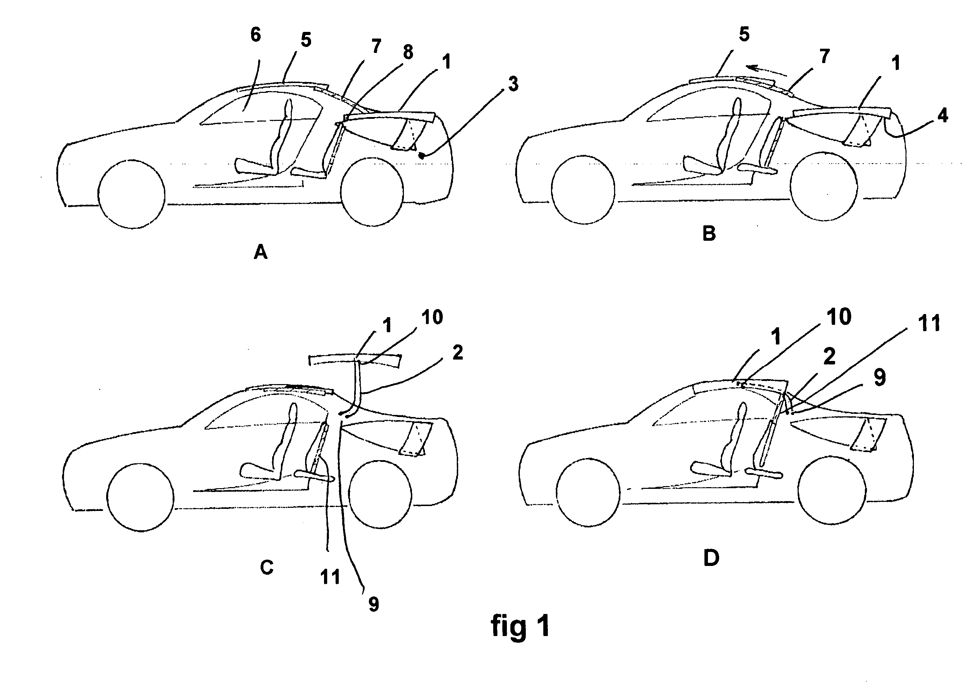

Comme on peut le voir sur la figure 1, le panneau mobile 1 est situé au dessus du coffre 3 de sorte que le véhicule est du type tricorps.

Le panneau mobile 1 forme alors le couvercle du coffre et s'appuie sur le bord 4 supérieur dudit coffre.

Le véhicule comporte en outre un toit 5 dit supérieur situé au dessus du compartiment 6 logeant les passagers et le conducteur.

Une lunette 7 s'étend entre l'arrière du toit supérieur précité et le panneau mobile 1 et notamment en retrait du bord 8 avant du panneau mobile et au dessus de celui-ci.

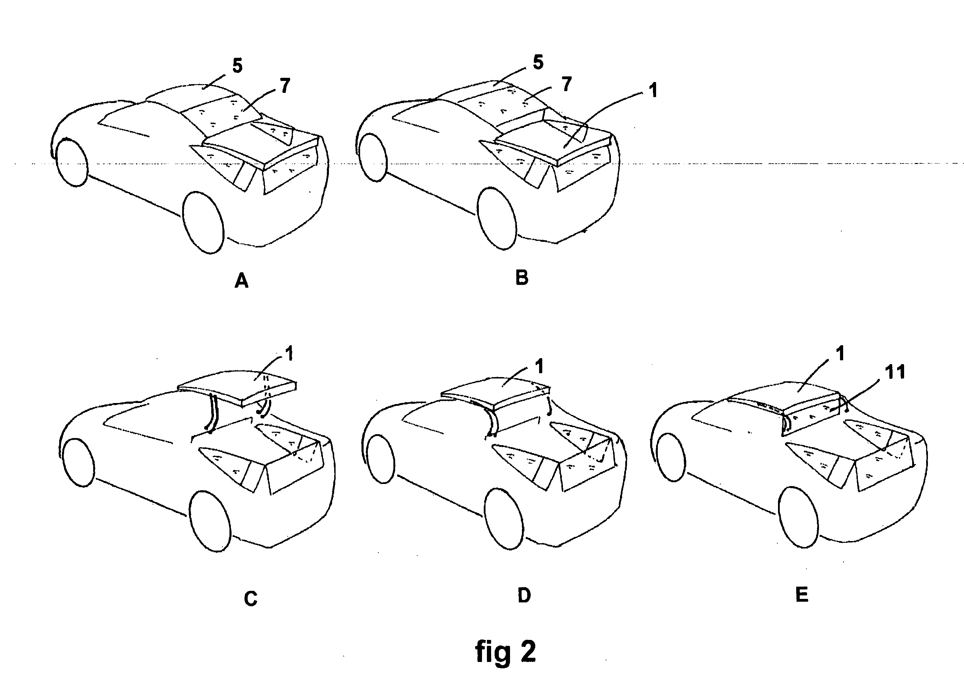

Pour la transformation du véhicule tricorps en véhicule «pick-up», ( Figure 1 et 2) la lunette 7 (figure 1 b ) glisse vers l'avant sous ou dessus ou dans le toit 5 supérieur et le panneau mobile 1 vient au dessus de l'ensemble toit supérieur/ lunette, ce panneau mobile étant déplacé par le pivotement des bras articulés (figure 1c et 1d).

Les bras 2 articulés forment un quadrilatère déformable et ces bras pivotent au niveau de leur base 9 et de la liaison 10 avec le panneau mobile.

L'amplitude du mouvement est lié à la longueur de ces bras 2.

Une cloison 11 mobile au moins localement transparente glisse vers le haut, de l'arrière de l'habitacle, pour fermer l'espace entre le bord arrière du panneau mobile couvrant le toit supérieur et la caisse du véhicule.

Le coffre est alors ouvert vers le haut ce qui correspond à un type «pick-up».

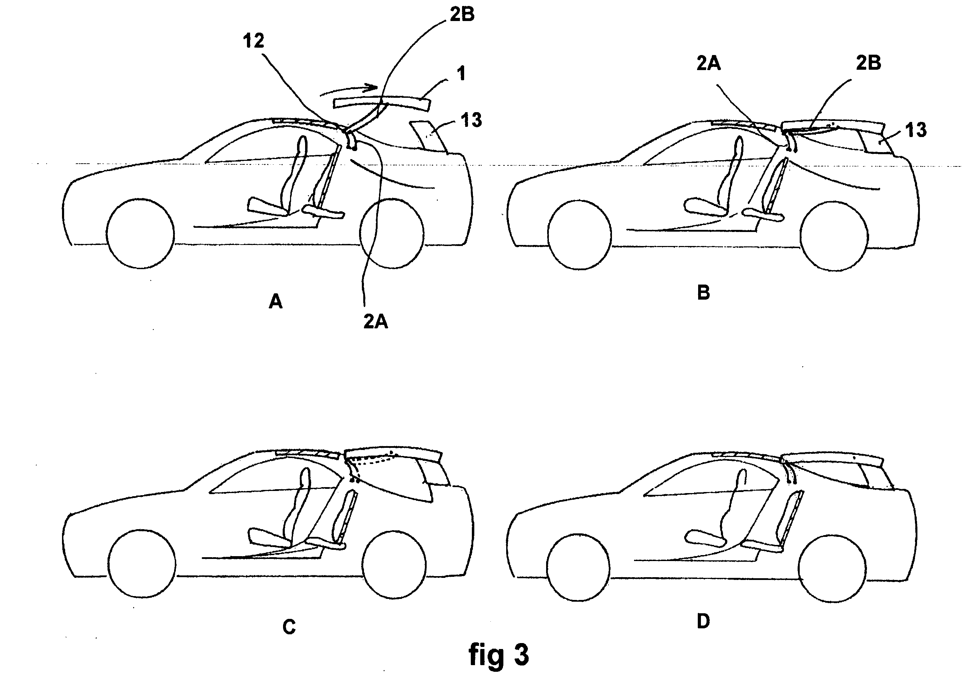

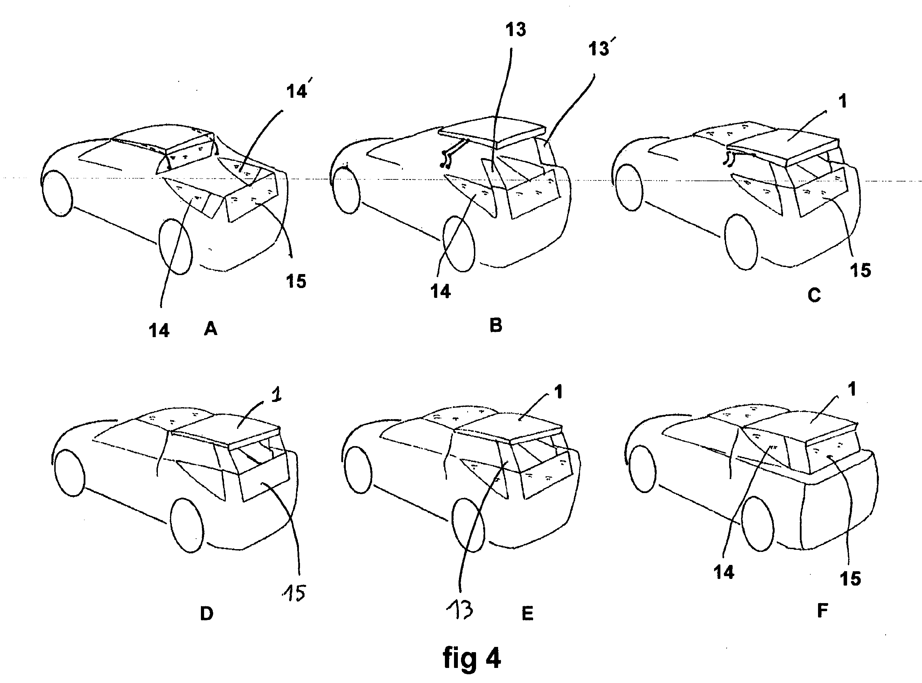

Pour la transformation en véhicule bicorps ou « break » ( figure 3, 4), le panneau mobile 1 est placé au dessus du coffre mais à distance et vers le haut de la position qu'il occupe lorsque le panneau mobile forme le couvercle du coffre.

Dans cette position, le panneau mobile n'appuie pas sur le bord supérieur du coffre.

Les bras 2 articulés qui déplacent le panneau mobile sont en deux parties 2A, 2B, une première partie 2A articulée à la base sur la caisse et une seconde partie 2B articulée sur cette première partie en son extrémité haute 12.

Ainsi lorsque le panneau mobile 1 se situe au dessus du toit supérieur 5, la seconde partie 2B des bras 2 peut être basculée vers l'arrière, la première partie 2A des bras restant immobile.

Des montants 13,13' arrières situés au niveau du coffre, sont remontés depuis le coffre et servent d'appui au panneau mobile. Cette remontée peut se faire par pivotement ou par translation.

Des vitres 14, 14' latérales et une vitre 15 arrière viennent fermer les ouvertures latérales et arrière.

Par vitres latérales, on comprendra des vitres situées à l'arrière de l'habitacle.

Ces vitres latérales et la vitre arrière s'escamotent dans l'épaisseur des parois de la caisse.

Des moyens de verrouillage ( non représentés) sont prévus entre le panneau mobile et les montants et/ou entre le panneau mobile et le bord arrière du toit dit supérieur et/ou entre le panneau mobile et la traverse supérieure du pare brise et/ou en tous autres endroits de la caisse du véhicule.

En cette dernière position (bicorps), on augmente le volume du coffre.

Il est entendu que des moyens d'étanchéité complètent les moyens précités.

Les moyens de liaison du panneau mobile avec le véhicule, la caisse ou le châssis, permettent de déplacer le panneau mobile entre trois positions, l'une fermant le coffre, la deuxième au dessus de l'habitacle et la troisième au dessus du coffre mais à distance de ce dernier.

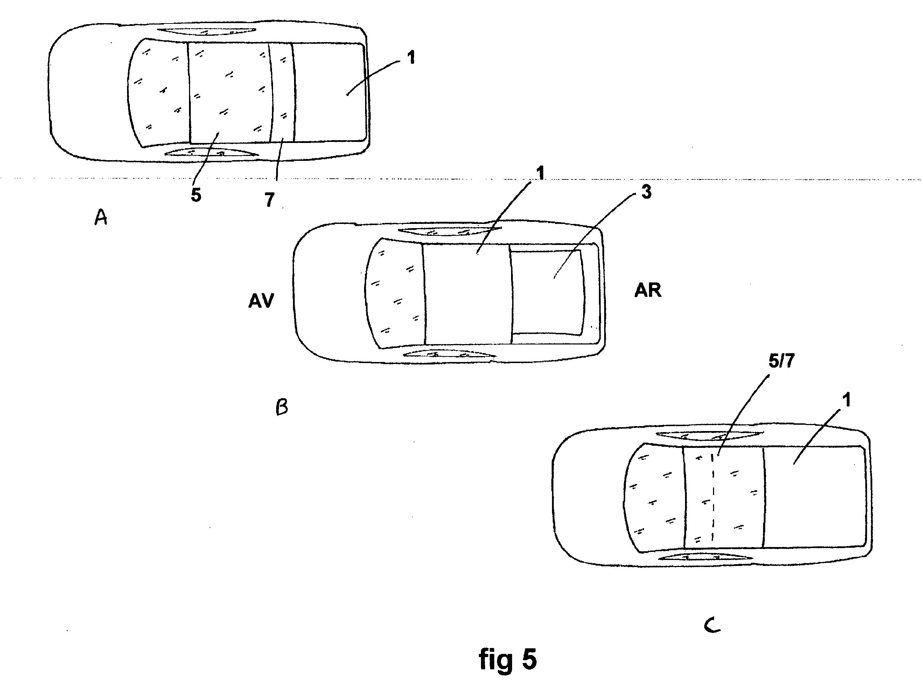

La figure 5 permet de visualiser la position du panneau mobile selon les trois formes de véhicule. La figure 5a montre le type tricorps. La figure 5b montre le type pick up. La figure 5c montre le type bicorps.

Il est entendu que le toit 5 supérieur ainsi que la lunette 7 arrière peuvent être, dans une version, démontables.

Il est également entendu que les mouvements peuvent être réalisés manuellement ou par des moteurs.

Les figures 1 et 2 montrent la cinétique de transformation d'un type tricorps en type pickup.

Les figures 3 et 4 montrent la cinétique de transformation du type «pick-up» et bicorps. L'ordre des mouvement des pièces mobiles peut être modifiée.

Le panneau mobile recouvre tout ou partie du toit supérieur. On peut avantageusement envisager une complémentarité de forme entre le panneau mobile et la carrosserie ainsi que le toit supérieur.

## Revendications

1. Véhicule convertible comprenant un panneau mobile 1 relié au moins indirectement au châssis du véhicule par des moyens (2) articulés **caractérisé en ce que** le panneau mobile est déplaçable entre trois positions pour obtenir une configuration tricorps ou « »pick-up» » ou bicorps.

2. Véhicule convertible selon la revendication 1 **caractérisé en ce que** les moyens articulés sont des bras pivotants.

3. Véhicule convertible selon la revendication 2 **caractérisé en ce que** les bras sont en deux parties(2A,2B) articulées l'une sur l'autre.

4. Véhicule convertible selon la revendication 3 **caractérisé en ce qu'**on utilise toute la longueur du bras (2) pour passer d'une configuration tricorps à une configuration « »pick-up» ».

5. Véhicule convertible selon la revendication 3 **caractérisé en ce qu'**on utilise une partie de la longueur du bras pour passer d'une configuration « »pick-up» » à une configuration bicorps.

6. Véhicule convertible selon la revendication 1 **caractérisé en ce qu'**il comprend une cloison (11) mobile au moins localement transparente glissant vers le haut, de l'arrière de l'habitacle, pour fermer l'espace entre le bord arrière du panneau mobile couvrant un toit supérieur et la caisse du véhicule.

7. Véhicule convertible selon la revendication 1 **caractérisé en ce qu'**il comprend une lunette (7) glissant vers l'avant sous ou dessus ou dans un toit (5) supérieur.

8. Véhicule convertible **caractérisé** selon la revendication 1 **caractérisé en ce qu'**il comprend des montants (13,13').
